# EUROPEAN PATENT SPECIFICATION

(11) **EP 0 789 068 B1**
(45) Date of publication and mention of the grant of the patent: **03.11.1999**
(21) Application number: 96112802.2
(22) Date of filing: 08.08.1996
(51) Int. Cl.: C09K 21/14, C08K 3/32, C09K 3/10

(54) **Intumescent composition**
Intumeszenzzusammensetzung
Composition intumescente

(30) Priority: 09.08.1995 JP 22277695
(43) Date of publication of application: 13.08.1997
(73) Proprietor: OBAYASHI CORPORATION, Osaka-shi, Osaka 541 (JP); KANEGAFUCHI KAGAKU KOGYO KABUSHIKI KAISHA, Kita-ku Osaka-shi (JP)
(72) Inventor: Kawachi, Takeshi, Tokorozawa-shi, Saitama (JP); Hori, Nagao, Kawagoe-shi, Saitama (JP); Sakaguchi, Masashi, Kakogawa-shi, Hyogo (JP); Chiba, Makoto, Kobe-shi, Hyogo (JP); Okamoto, Toshihiko, Kobe-shi, Hyogo (JP); Noda, Kouji, Yokohama-shi, Kanagawa (JP)
(74) Representative: VOSSIUS & PARTNER

(56) References cited:
- EP-A- 0 312 967
- US-A- 5 185 103
- PATENT ABSTRACTS OF JAPAN vol. 015, no. 154 (C-0825), 18 April 1991 & JP-A-03 031379 (MITSUI KINZOKU TORYO KAGAKU KK;OTHERS: 01), 12 February 1991, & DATABASE WPI Section Ch, Week 9112 Derwent Publications Ltd., London, GB; Class A97, AN 91-84575
- DATABASE WPI Week 9616 Derwent Publications Ltd., London, GB; AN 96-157284 XP002018488 & JP-A-08 041 361 (KANEBUCHI KAGAKU KOGYO)

## Description

This invention relates to an intumescent composition (a foaming type fireproof composition), more particularly to an intumescent composition which forms a foamed char layer when exposed to fire after its application to joints, gaps, holes and the like of internal and external walls of general buildings, thereby exerting its effects to protect lumber and the like combustible materials from fire and to prevent outflow of gases and the like generated by smoke, flame and combustion.

In relation to the fire resistance and fireproof ability of buildings and their partial areas, similar levels of fire resistance and fireproof ability are required to be present in sealing materials and gaskets which are used for fitting panes to openings or applied to joints of curtain walls, panels and the like.

Because of this, glass putty, asbestos and the like materials have been used in the partial areas which require fire resistance and fireproof ability. However, the use of glass putty in fixed sash windows is prohibited, because it has been revealed that breakage of panes by earthquake and the like vibrations is considerably serious due to markedly hard condition of the glass putty cured, thus causing extremely inferior interlayer displacement following ability. Also, the use of asbestos-based materials are restricted, because they are harmfulness to the human body and hardly used in practice.

On the other hand, water tight and air tight are the main purposes of sealing materials in which silicone-based, modified silicone-based, polysulfide-based, urethane-based and the like materials are used. However, most of these materials are combustible and dropped when exposed to high temperature due to fire and the like, so that they hardly show their effect to protect openings from fire. Therefore, a complex method is employed in which foaming asbestos or the like material is cut in the width of a joint opening and inserted with compression into the bottom of the joint opening which is subsequently treated with a waterproof sealing. Though the silicone-based sealing material is noticed as a sealing material for use in a certain type of fire doors because of its good noncombustibility, it has problems in terms of paintability and water repellent contamination. In consequence, great concern has been directed toward the development of a sealing material having fire resistance and fireproof ability which can be used in broad range of applications.

In view of such background, development of noncombustible sealing materials has been noticed in recent years. Of the aforementioned sealing materials, a fireproof sealant composition, in which a modified silicone-based material is used, has been proposed in JP-A-3-31379 (the term "JP-A" as used herein means an "unexamined published Japanese patent application"). This composition is characterized by a modified silicone-based sealing material in which 100 parts by weight of a polyether polymer having a hydrolyzable silicon functional group on its terminal is blended with 20 to 150 parts by weight of an ammonium polyphosphate having a solubility of 5% by weight or less in water at 20°C and a decomposition temperature of 110°C or more, 15 to 75 parts by weight of polyhydric alcohols, 5 to 50 parts by weight of an amino group-containing compound and 0.1 to 10 parts by weight of a silanol compound catalyst. This composition is an intumescent composition in which its sealing material forms a noncombustible foamed char layer when exposed to fire, thereby exerting its effects to protect lumber and the like combustible materials from fire and to prevent outflow of gases and the like generated by smoke, flame and combustion.

However, though the ammonium polyphosphate to be used in this fireproof sealant composition has a solubility of 5% by weight or less in water at 20°C, the solubility is still high enough to cause a problem in terms of water resistance, as well as a problem of reducing foaming ability due to water absorption of the ammonium polyphosphate. That is, not only a fireproof sealant should be capable of maintaining its water resistance as a matter of course but also its foaming ability at the time of fire must not be changed with the lapse of time. In other words, its durability to resist fire is expected.

When there is a possibility of causing reduction of foaming ability due to water absorption of the ammonium polyphosphate, for example, when a fireproof sealant is applied to a foaming fire resistant paint, it is general that the foaming fire resistant paint is put into practical use by protecting it with a high waterproof topcoat such as a urethane paint.

On the other hand, JP-A-4-356581 proposes a considerably complex method in which water resistance as a sealant is improved by reducing solubility of an ammonium polyphosphate to be used, namely by enclosing the ammonium polyphosphate in microcapsules through its coating with a resin.

In view of the aforementioned problems involved in the prior art, therefore, an object of the present invention is to provide an intumescent composition having excellent water resistance of foaming performance which is a particular problem to be resolved as an intumescent composition that forms a carbonized layer swelled and foamed when heated, thereby exerting its effects to protect combustible materials from fire and to prevent outflow of gases and the like generated by smoke, flame and combustion.

The aforementioned problems have been solved by the provision of an intumescent composition (a foaming type fireproof composition) whose foaming performance is hardly deteriorated by water absorption and moisture absorption, by employing a saturated hydrocarbon polymer having low water vapor/gas permeability and excellent weather resistance and heat resistance.

That is, the present invention relates to an intumescent composition which comprises the following components (A) and (B) as essential components:
(A) a saturated hydrocarbon polymer which comprises at least one silicon-containing group that has a hydroxyl or hydrolyzable group linked to a silicon atom and is capable of undergoing cross-linking by forming a siloxane bonding; and
(B) a polyphosphate compound.
   Further, the present invention relates to an intumescent composition in which the just described foaming type fireproof composition further contains at least one of the following components (C), (D) and (E) as an essential component:
(C) a silanol condensation catalyst;
(D) a polyfunctional alcohol; and
(E) an amino group-containing compound.

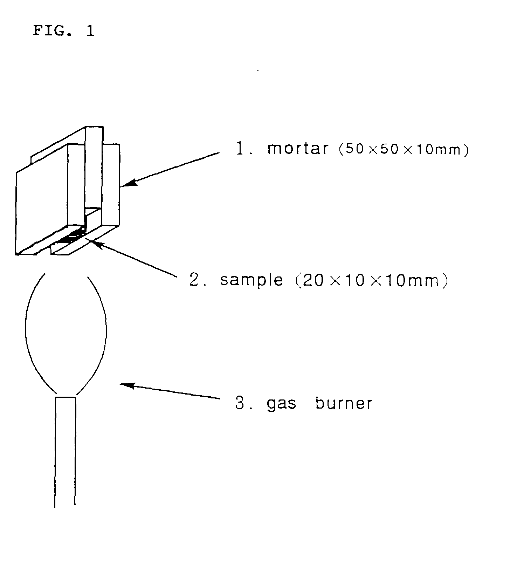

Fig. 1 is an illustration showing conditions of a foaming characteristics test, in which 1 is a mortar (50 × 50 × 10 mm), 2 is a sample (20 × 10 × 10 mm) and 3 is a gas burner.

According to the present invention, a saturated hydrocarbon polymer which comprises at least one silicon-containing group (namely a reactive silicon group) that has a hydroxyl or hydrolyzable group linked to a silicon atom and is capable of undergoing cross-linking by forming a siloxane bonding, is used (hereinafter, referred to as "saturated hydrocarbon polymer (A))".

The just described reactive silicon group to be used in the present invention is a well known functional group, and the typical examples thereof include those represented by the following formula (1):

-(SiR¹ _{2-b}X_{b}O)ₘ-SiR² ₃₋ₐXₐ (1)

wherein each of R¹ and R² independently is an alkyl group having 1 to 20 carbon atoms, an aryl group having 6 to 20 carbon atoms, an aralkyl group having 7 to 20 carbon atoms or a triorganosiloxy group represented by formula R³₃SiO- (wherein R³ is a monovalent hydrocarbon moiety having 1 to 20 carbon atoms, and the three R³ moieties may be the same or different from one another), with the proviso that when two or more of R¹ or R² are present, they may be the same or different from one another; X is a hydroxyl group or a hydrolyzable group, with the proviso that when two or more of X are present, they may be the same or different from one another; a is an integer selected from 0 to 3 and b is an integer selected from 0 to 2, provided that a + mb ≥ 1 and that b in m of (SiR¹_{2-b}X_{b}O)ₘ is not always the same; and m is an integer selected from 0 to 19.

The hydrolyzable group (X) in the formula (1) is not particularly limited and commonly known hydrolyzable groups can be used, with their illustrative examples including a hydrogen atom, an alkoxy group, an acyloxy group, a ketoximate group, an amino group, an amido group, an aminoxy group, a mercapto group, an alkenyloxy group and the like. Of these groups, an alkoxy group is particularly preferred from the viewpoint of mild hydrolyzability and easy handling.

The hydrolyzable group and hydroxyl group can bind to a silicon atom within the range of from 1 to 3 groups per 1 atom, and (a + mb) is preferably within the range of from 1 to 5. When two or more hydrolyzable groups and/or hydroxyl groups bind to the reactive silicon group, they may be the same or different from one another. The number of silicon atom which forms the reactive silicon group may be one or two or more, but up to 20 may be preferable in the case of silicon atoms linked by siloxane bonding and the like. Particularly, a reactive silicon group represented by the formula (2):

-SiR² ₃₋ₐXₐ (2)

(wherein R², X and a are as defined above) is easily available and therefore desirable.

At least 1, preferably 1.1 to 5, reactive silicon groups are present in one molecule of the saturated hydrocarbon polymer. When the number of the reactive silicon group contained in one molecule becomes less than 1, expression of proper rubber-like elasticity may become difficult due to insufficient curability.

The reactive silicon groups may be present at the terminals of the saturated hydrocarbon polymer molecular chain and/or at inner positions thereof. The presence of the reactive silicon groups at the terminals of the molecular chain is particularly desirable, because an effective network chain quantity of the saturated hydrocarbon polymer component contained in the finally formed cured product becomes large and a high strength and high elongation rubber-like cured product can therefore be obtained easily. In addition, the saturated hydrocarbon polymers containing these reactive silicon groups may be used alone or as a mixture of two or more.

The saturated hydrocarbon polymer to be used in the present invention can be obtained, for example, by a method comprising:
(1) effecting polymerization using ethylene, propylene, 1-butene, isobutylene or the like olefinic compound of 1 to 6 carbon atoms as the main monomer, or
(2) effecting homopolymerization of butadiene, isoprene or the like diene compound, or effecting copolymerization of the aforementioned olefinic compound with the diene compound, and then carrying out hydrogenation.

However, the saturated hydrocarbon polymer may preferably be an isobutylene polymer, a hydrogenated polybutadiene polymer or a hydrogenated polyisoprene polymer, because of its advantages in that functional groups can be introduced easily into its terminals, its molecular weight can be controlled easily and the number of terminal functional groups can be increased.

The just described isobutylene polymer may be formed entirely from isobutylene as the monomer unit or may contain another monomer unit which is copolymerizable with isobutylene, in an amount of preferably 50% (% by weight, the same shall apply hereinafter) or less, more preferably 30% or less, most preferably 10% or less, of the isobutylene polymer.

Examples of such monomer component include an olefin of 4 to 12 carbon atoms, a vinyl ether, an aromatic vinyl compound, vinyl silanes, allyl silanes and the like. Illustrative examples of such copolymer component include 1-butene, 2-butene, 2-methyl-1-butene, 3-methyl-1-butene, pentene, 4-methyl-1-pentene, hexene, vinylcyclohexane, methyl vinyl ether, ethyl vinyl ether, isobutyl vinyl ether, styrene, α-methylstyrene, dimethylstyrene, p-t-butoxystyrene, p-hexenyloxystyrene, p-allyloxystyrene, p-hydroxystyrene, β-pinene, indene, vinyldimethylmethoxysilane, vinyltrimethylsilane, divinyldimethoxysilane, divinyldimethylsilane, 1,3-divinyl-1,1,3,3-tetramethyldisiloxane, trivinylmethylsilane, tetravinylsilane, allyldimethylmethoxysilane, allyltrimethylsilane, diallyldimethoxysilane, diallyldimethylsilane, γ-methacryloyloxypropyltrimethoxysilane, γ-methacryloyloxypropylmethyldimethoxysilane and the like.

Similar to the case of the above isobutylene polymer, the aforementioned hydrogenated polybutadiene polymer and other saturated hydrocarbon polymers may also contain other monomer units in addition to the main monomer unit.

In addition, the saturated hydrocarbon polymer to be used as the component (A) of the present invention may contain a monomer unit which leaves double bond after polymerization, such as butadiene, isoprene, 1,13-tetradecadiene, 1,9-decadiene, 1,5-hexadiene or the like polyene compound, in a small amount, preferably 10% or less, provided that it solves the object of the present invention.

The aforementioned saturated hydrocarbon polymer (preferably a isobutylene polymer, a hydrogenated polyisoprene polymer or a hydrogenated polybutadiene polymer) may have preferably an approximate number average molecular weight of from 500 to 100,000, and a range of from 1,000 to 40,000, which results in a liquid or fluid state, is particularly preferred form the viewpoint of easy handling and the like. In this connection, a narrower molecular weight distribution (Mw/Mn) is preferable, because the viscosity in the same molecular weight becomes low.

The methods for the production of saturated hydrocarbon polymers containing reactive silicon groups are described hereinafter, particularly in the case of isobutylene polymers and hydrogenated polybutadiene polymers.

Of the above isobutylene polymers having reactive silicon groups, an isobutylene polymer having reactive silicon groups at the molecular terminals can be produced using a terminal functional group type, preferably total terminal functional group type, isobutylene polymer obtained by a polymerization method called inifer method (a cation polymerization method using a specific compound called inifer which acts as both initiator and chain transfer agent). Such a type of production method is described, for example, in U.S. Patent 4,904,732 (corresponding to JP-A-63-6003 and JP-A-63-6041), U.S. Patent 4,900,772 (corresponding to JP-A-63-254149), JP-A-64-22904 and JP-A-64-38407.

Also, an isobutylene polymer having reactive silicon groups in the molecule can be produced by adding vinyl silanes or allyl silanes having reactive silicon groups to monomers mainly consisting of isobutylene and then effecting copolymerization.

In addition, an isobutylene polymer having reactive silicon groups both in the molecule and at the molecular terminals can be produced by effecting copolymerization of the main component isobutylene with vinyl silanes, allyl silanes or the like monomers having reactive silicon groups in the practice of the aforementioned polymerization for the production of isobutylene polymer having reactive silicon groups at the molecular terminals and then introducing reactive silicon groups into the molecular terminals.

Illustrative examples of the vinyl silanes and allyl silanes having reactive silicon groups include vinyltrichlorosilane, vinylmethyldichlorosilane, vinyldimethylchlorosilane, vinyldimethylmethoxysilane, divinyldichlorosilane, divinyldimethoxysilane, allyltrichlorosilane, allylmethyldichlorosilane, allyldimethylchlorosilane, allyldimethyldimethoxysilane, diallyldichlorosilane, diallyldimethoxysilane, γ-methacryloyloxypropyltrimethoxysilane, γ-methacryloyloxypropylmethyldimethoxysilane and the like.

With regard to the production of a hydrogenated polybutadiene polymer, a hydrogenated polybutadiene having terminal olefin groups (hereinafter, referred to as "terminal olefin hydrogenated polybutadiene polymer") is firstly produced, for example, by converting hydroxyl groups of a terminal hydroxy hydrogenated polybutadiene polymer into -ONa, -OK and the like oxymetal groups and then allowing it to react with an organic halogen compound represented by the following formula (3):

CH₂=CH-R⁴-Y (3)

wherein Y is a halogen atom such as chlorine atom, bromine atom and iodine atom and R⁴ is a divalent organic group represented by a formula -R⁵-, -R⁵-OC(=O)- or -R⁵-C(=O)- (wherein R⁵ is a divalent hydrocarbon moiety having 1 to 20 carbon atoms, preferably alkylene, cycloalkylene, allylene, aralkylene and the like groups), of which a divalent group selected from -CH₂- and -p-R⁶-C₆H₄-CH₂- (wherein R⁶ is a hydrocarbon moiety having 1 to 10 carbon atoms) is particularly preferred.

The conversion of the terminal hydroxyl groups of a terminal hydroxy hydrogenated polybutadiene polymer into oxymetal groups may be effected by a method in which the polymer is allowed to react with Na. K or the like alkali metal, NaH or the like metal hydride, NaOCH₃ or the like metal alkoxide or NaOH, KOH or the like caustic alkali.

By the above method, a terminal olefin hydrogenated polybutadiene polymer having almost the same molecular weight of the terminal hydroxy hydrogenated polybutadiene polymer used as the starting material is obtained. When a polymer having a higher molecular weight is desired, its molecular weight can be increased by allowing the starting material to react with a polyvalent organic halogen compound containing two or more halogen atoms in one molecule, such as methylene chloride, bis(chloromethyl)benzene, bis(chloromethyl) ether or the like, prior to its reaction with the organic halogen compound of the formula (3), and its subsequent reaction with the organic halogen compound of the formula (3) results in the formation of a hydrogenated polybutadiene polymer of a larger molecular weight having olefin groups at the terminals.

Illustrative examples of the organic halogen compound of the formula (3) include allyl chloride, allyl bromide, vinyl(chloromethyl)benzene, allyl(chloromethyl)benzene, allyl(bromomethyl)benzene, allyl(chloromethyl) ether, allyl(chloromethoxyl)benzene, 1-butenyl(chloromethyl)ether, 1-hexenyl(chloromethoxyl)benzene, allyloxy(chloromethyl)benzene and the like, though not particularly limited thereto. Of these compounds, allyl chloride is preferred because it is inexpensive and reacts easily.

The introduction of reactive silicon groups into the terminal olefin hydrogenated polybutadiene polymer can be achieved similar to the case of the isobutylene polymer having reactive silicon groups at the molecular terminals, for example, by allowing the polymer to undergo addition reaction with a hydrosilane compound, in which a hydrogen atom is linked to the group of the formula (1), preferably a compound represented by the following formula (4):

HSiR² ₃₋ₐXₐ (4)

(wherein R², X and a are as defined above) in the presence of a platinum catalyst.

Illustrative examples of the hydrosilane compound in which a hydrogen atom is linked to the group of the formula (1) include halogenated silanes such as trichlorosilane, methyldichlorosilane, dimethylchlorosilane, phenyldichlorosilane and the like; alkoxysilanes such as trimethoxysilane, triethoxysilane, methyldiethoxysilane, methyldimethoxysilane, phenyldimethoxysilane and the like; acyloxysilanes such as methyldiacetoxysilane, phenyldiacetoxysilane and the like; and ketoximate silanes such as bis(dimethylketoximate)methylsilane, bis(cyclohexylketoximate)methylsilane and the like, though not particularly limited thereto. Of these compounds, halogenated silanes and alkoxysilanes are particularly preferred.

As the component (B) of the present invention, a polyphosphate compound is used. The polyphosphate compound not only acts as a dehydration catalyst of organic materials under heated conditions but also has a function to form by itself a noncombustible inorganic phosphate film. The polyphosphate compound is not particularly limited with the proviso that it is a salt of polyphosphoric acid, but it may be preferably a salt of polyphosphoric acid with ammonia or an organic base, more preferably a salt of polyphosphoric acid with ammonia or an amine, most preferably ammonium polyphosphate. Examples of the amine compound which forms the above salts include methylamine, ethylamine and the like. A salt of polyphosphoric acid with ammonia or an amine forms condensed polyphosphoric acid by deammonia or the like deamine reaction when heated to its decomposition temperature. The thus formed acid acts as a dehydration catalyst of organic materials and carbonizes the organic materials, thereby resulting in the formation of fire-proof carbonized layer. Also, the ammonia gas and the like generated thereby act as a foaming agent to effect swelling of the entire composition. Preferably, the salt of polyphosphoric acid with ammonia or an amine may have a phosphorus content of 15% by weight or more, a nitrogen content of 14% or more and a decomposition temperature of 200°C or more, also having low hygroscopicity in view of easy handling. Though not particularly limited, examples of such a salt of polyphosphoric acid with ammonia or an amine include an insolubilized high molecular phosphorus compound "Sumi Safe PM" (trade name) which comprises ammonium polyphosphate and is produced by Sumitomo Chemical Co., Ltd.

Though not particularly limited, the component (B) may be blended preferably in an amount of from 10 to 200 parts by weight based on 100 parts by weight of a saturated hydrocarbon polymer to be used as the component (A) or, when a plasticizer is further blended, preferably in an amount of from 10 to 200 parts by weight based on 100 parts by weight of the total of the component (A) and the plasticizer. If the blending amount of the component (B) is smaller than this range, it would bear no effective carbonization and foaming of the entire composition. On the other hand, if the blending amount of component (B) is larger than this range, it would reduce workability due to increased viscosity of the composition.

A silanol condensation catalyst may be used as a component (C) of the present invention. Silanol condensation catalysts are well known compounds, and their illustrative examples include titanic acid esters such as tetrabutyl titanate, tetrapropyl titanate and the like; tin carbonates such as dibutyltin dilaurate, dibutyltin maleate, dibutyltin diacetate, tin octylate, tin naphthenate and the like; reaction products of dibutyltin oxide and phthalic acid esters; dibutyltin diacetylacetonate; organic aluminum compounds such as aluminum trisacetylacetonate, aluminum trisethylacetoacetate, diisopropoxyaluminum ethylacetoacetate and the like; chelate compounds such as zirconium tetraacetylacetonate, titanium tetraacetylacetonate and the like; lead octylate; amine compounds such as butylamine, octylamine, laurylamine, dibutylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethylaminomethyl)phenol, morpholine, N-methylmorpholine, 2-ethyl-4-methylimidazole, 1,8-diazabicyclo(5,4,0)undecene-7(DBU) and the like or salts of these amine compounds with carbonic acids and the like; low molecular weight polyamide resins obtained from excess polyamine and polybasic acids; reaction products of excess polyamine with epoxy compounds; and amino group-containing silane coupling agents such as γ-aminopropyltrimethoxysilane, N-(β-aminoethyl)aminopropylmethyldimethoxysilane and the like; as well as other acidic catalysts, basic catalysts and the like known silanol condensation catalysts. These catalysts may be used alone or as a mixture of two or more.

The component (C) may be blended in an amount of preferably from 0.1 to 20 parts by weight, more preferably from 1 to 10 parts by weight, based on 100 parts by weight of the component (A) saturated hydrocarbon polymer. If the amount of the component (C) is smaller than this range, it would slow down the curing rate or cause insufficient curing reaction. On the other hand, if the amount of component (C) is larger than this range, it would cause local heat generation and foaming at the time of curing, thus entailing a difficulty in obtaining proper cured product, as well as too short pot life which is not desirable from the viewpoint of workability.

Also, in addition to the aforementioned components (A) and (B), a polyfunctional alcohol may be used as a component (D) in the present invention. The polyfunctional alcohol swells when heated and forms carbonized foam film by carbonization in the presence of a polyphosphate compound as a dehydration catalyst. It may have a decomposition temperature of 200°C or more, preferably 300°C or more, at which it is carbonized by heat. Though not particularly limited, examples of such a polyfunctional alcohol include polyhydric alcohols such as mono-, di-, tri- or pentaerythritol and the like, polysaccharides such as starch, cellulose and the like and oligosaccharides such as glucose, fructose and the like. These alcohols may be used alone or as a mixture of two or more.

Though not particularly limited, the component (D) may be blended preferably in an amount of from 10 to 100 parts by weight based on 100 parts by weight of the component (A) saturated hydrocarbon polymer or, when a plasticizer is further blended, preferably in an amount of from 10 to 100 parts by weight based on 100 parts by weight of the total of the plasticizer and the component (A). If the amount of the component (D) is smaller than this range, it would not bear sufficient swelling. On the other hand, if the amount of component (D) is larger than this range, it would not bear sufficient foamed char film formation.

Also, in addition to the aforementioned components (A) and (B), an amino group-containing compound may be used as a component (E) in the present invention. The amino group-containing compound acts as a swelling agent and generates nitrogen, ammonia and the like noncombustible gases as it is decomposed by heat, thereby effecting swelling of the whole composition to an appropriate size. Though not particularly limited, examples of this type of compound include dicyandiamide, melamine, guanamine, guanidine, urea and azodicarbonamine, as well as amino resins such as melamine resin, guanamine resin, urea resin and the like. These compounds may be used alone or as a mixture of two or more.

Though not particularly limited, the component (E) may be blended preferably in an amount of from 5 to 50 parts by weight based on 100 parts by weight of the component (A) saturated hydrocarbon polymer or, when a plasticizer is further blended, preferably in an amount of from 5 to 50 parts by weight based on 100 parts by weight of the total of the plasticizer and the component (A). If the amount of the component (E) is smaller than this range, it would not bear sufficient swelling. On the other hand, if the amount of component (E) is larger than this range, it would not bear sufficient strength of the carbonized foam film.

According to the present invention, it is preferable to add at least one of the components (C), (D) and (E) to the components (A) and (B), and it is most preferable to add all of the components (C), (D) and (E) jointly to components (A) and (B).

In addition to the above components, the composition of the present invention may be further blended optionally with a plasticizer, a reinforcing agent and/or a filler, as well as a hindered phenol- or hindered amine-based antioxidant, a UV absorbent, a light stabilizer, a pigment, a surface active agent and an adhesiveness providing agent such as a silane coupling agent, as occasion demands depending on the required characteristics for each use.

Of these additives, the plasticizer is used to improve workability by controlling fluid characteristics of the composition and can be selected from conventionally used plasticizers, preferably those which have proper compatibility with the component (A) saturated hydrocarbon polymer to be used in the present invention. Examples of the plasticizer having proper compatibility include polybutene, hydrogenated polybutene, α-methylstyrene oligomer, liquid polybutadiene, hydrogenated liquid polybutadiene, paraffin oil, naphthene oil, atactic polypropylene and the like, of which hydrogenated polybutene, hydrogenated liquid polybutadiene, paraffin oil, naphthene oil, atactic polypropylene and the like hydrocarbon compounds having no unsaturated bonds are preferred. These plasticizers may be used alone or as a mixture of two or more. A plasticizer which shows poor compatibility by itself can also be used when its compatibility can be improved by its combined use with the just described hydrocarbon compounds.

As the reinforcing agent and filler, conventionally used inorganic materials can be used. Particularly, those, which contain hydroxyl groups and crystal water and generate water vapor when heated, are desirable from the viewpoint of fireproof property, because an effect to markedly delay combustion rate of the composition can be expected. Though not particularly limited, illustrative examples of such reinforcing agent and filler include aluminum hydroxide, calcium hydroxide, magnesium hydroxide, kaolin, kaolinite and the like.

The preparation method of the intumescent composition of the present invention has no particular limitation, and an ordinary method can be employed such as a method in which the aforementioned components are formulated and kneaded using a mixer, a roller, a kneader or the like at an ordinary temperature or with heating or a method in which the components are dissolved in an appropriate amount of solvent and then mixed. Also, a two-part composition can be produced and used by a proper combination of these components.

In addition, the intumescent composition of the present invention can also be used as foam sheets, foam gaskets or moldings. For example, penetration of flame and smoke at the time of fire can be prevented when gaps in every direction of a fire door are sealed by applying foam sheets or fixing foam gaskets.

The composition of the present invention obtained in this manner shows excellent water resistance in relation to the foaming characteristics, which cannot be obtained in the conventional foaming type fireproof materials. Such improvement of water resistance has been achieved by a novel method in which water resistance of the composition itself are improved by the use of a saturated hydrocarbon polymer having extremely small water vapor permeability.

The present invention is now illustrated in greater detail with reference to the following Examples. However, it is not intended that the present invention be limited to the Examples.

### PRODUCTION EXAMPLE

### Production of saturated hydrocarbon polymer (A):

A 1 liter capacity pressure glass autoclave was charged with 7.5 mmol of the following compound (P-DCC)

p-Cl(CH₃)₂CC₆H₄C(CH₃)₂Cl

and then an agitation blade, a three-way cock and a vacuum line were attached thereto, subsequently replacing the inner atmosphere with nitrogen.

Thereafter, while flowing nitrogen through one inlet of the three-way cock, 330 ml of toluene and 141 ml of hexane which have been dried by a molecular sieve treatment was introduced into the autoclave using a syringe. A 3.0 mmol portion of α-picoline was then added as an additive agent.

Next, a needle valve-attached liquefied gas sampling tube made of pressure glass was charged with 113 g of isobutylene which has been dehydrated by passing through a column packed with barium oxide and connected to the three-way cock and then the autoclave was put in a dry ice-acetone bath of -70°C to cool down contents in the polymerization vessel for 1 hour with stirring. After cooling, atmosphere in the vessel was decompressed using the vacuum line and then the needle valve was opened to introduce isobutylene from the pressure glass liquefied gas sampling tube into the polymerization vessel. Thereafter, the atmosphere in the vessel was returned to normal pressure by feeding nitrogen from another inlet of the three-way cock.

Next, after confirming that the inside of the polymerization vessel was stable at -70°C, 7.18 g (3.8 mmol) of TiCl₄ was added through the three-way cock using a syringe to start polymerization and then, 2 hours thereafter, 2.57 g (22.5 mmol) of allyltrimethylsilane was added. After further 1 hour of the reaction, the reaction mixture was poured into water to deactivate the catalyst. Next, the organic layer was washed three times with pure water and subjected to phase separation and then the solvent was evaporated under a reduced pressure to obtain an allyl-terminal isobutylene polymer.

Next, a 100 g portion of the thus obtained allyl-terminal isobutylene polymer was dissolved in 50 ml of n-heptane, and the solution was heated to approximately 70°C and mixed with 1.2 (eq./allyl group) of methyldimethoxysilane and 1 × 10⁻⁴ (eq./allyl group) of platinum (vinylsiloxane) complex to carry out hydrosilylation reaction. By monitoring the reaction by FT-IR, the disappearance of olefin-originated absorption at 1,640 cm⁻¹ was confirmed after about 4 hours of the reaction, and the reaction was terminated at that point.

By concentrating the reaction solution under a reduced pressure, the intended isobutylene polymer of the following structure having reactive silicon groups on its both terminals was obtained.

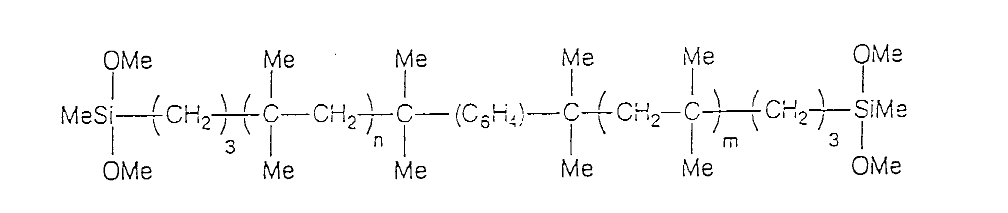

The percentage yield of the thus obtained polymer was calculated from its yield, its Mn and Mw/Mn were obtained by a GPC method (calculated as polystyrene) and its terminal structure was examined by measuring the strength of resonance signals of protons belonging to respective structures (initiator-originated proton, 6.5 - 7.5 ppm: methyl proton and methoxy proton linked to polymer termini-originated silicon atoms, 0.0 - 0.1 ppm and 3.5 - 3.4 ppm) by 300 MHz¹H-NMR analysis and comparing the data. The results are shown in Table 1.

**Table 1**

| Number Average Molecular Weight Mn (GPC) | Molecular Weight Distribution Mw/Mn | Number of Terminal Silyl Functional Groups Fn (silyl) |
|---|---|---|
| 17,500 | 1.30 | 2.00 |

In Table 1, the number average molecular weight means a molecular weight calculated as polystyrene, and the number of terminal silyl functional groups (terminal reactive silicon groups) means the number of groups per one molecule of the isobutylene polymer.

### INVENTIVE EXAMPLE 1

As a saturated hydrocarbon polymer (A), 100 parts by weight of the isobutylene polymer having reactive silicon groups on its both terminals obtained in the above Production Example was used, and the polymer was mixed with 100 parts by weight of paraffin-based process oil as a plasticizer, 100 parts by weight of ammonium polyphosphate, 40 parts by weight of pentaerythritol as a polyhydric alcohol and 15 parts by weight of dicyandiamide as an amino group-containing compound. The thus prepared mixture was stirred at room temperature and then thoroughly kneaded with triple rollers to make it into paste. The thus prepared composition was mixed with 3 parts by weight of tin octylate as a curing catalyst, 0.75 part by weight of laurylamine as a curing assistant and 5 parts by weight of Glauber's salt decahydrate, and the mixture was stirred.

Characteristics of the thus obtained composition were evaluated by the following methods. Its formulation is shown in Table 2, and the evaluation results are shown in Table 3.

### (Rubber property test)

Using the above composition, a sheet of 2 mm in thickness was prepared, and aged at 23°C for 1 week and then at 50°C for 1 week. Samples were stamped out from the thus cured sheet using a number three dumbbell in accordance with the procedure of JIS K6301 to carry out a tensile test at a tensile speed rate of 200 mm/minutes.

### (Foaming characteristics test)

Foaming characteristics test was carried out by the method shown in Fig. 1. That is, a joint portion of 10 mm in width, 10 mm in depth and 20 mm in length was prepared using three mortar plates (50 × 50 × 10 mm), and the aforementioned composition was injected into the joint portion in 10 mm in thickness and aged at 23°C for 1 week and then at 50°C for 1 week. Thereafter, the joint portion was heated with flame of 900°C using a gas burner to observe foaming conditions.

### (Water resistance test)

Similar samples used in the above foaming characteristics observation were prepared and soaked in hot water of 50°C for 1 week and then the wet samples were checked for their foaming conditions.

### INVENTIVE EXAMPLES 2 AND 3

Ammonium polyphosphate, pentaerythritol, dicyandiamine and the like were formulated in respective amounts shown in Table 2 to prepare compositions and their foaming characteristics and water resistance in relation to the foaming characteristics were evaluated in the same manner as described in Inventive Example 1. Their formulations and evaluation results are shown in Tables 2 and 3, respectively.

### COMPARATIVE EXAMPLE

As the base polymer, 100 parts by weight of a polyether polymer was used, and the polymer was mixed with 50 parts by weight of dioctyl phthalate (DOP) as a plasticizer, 100 parts by weight of ammonium polyphosphate, 40 parts by weight of pentaerythritol as a polyhydric alcohol and 15 parts by weight of dicyandiamide as an amino group-containing compound. The thus prepared mixture was stirred at room temperature and then thoroughly kneaded with triple rollers to make it into paste. The thus prepared composition was mixed with 3 parts by weight of tin octylate as a curing catalyst and 0.75 part by weight of laurylamine as a curing assistant, and the mixture was stirred.

Using the thus obtained composition, a cured product was prepared under the same conditions of Inventive Example 1 to carry out a water resistance test. Its formulation and evaluation results are shown in Tables 2 and 3, respectively.

**Table 2**

| Formulated Components | Inventive Ex. 1 | Inventive Ex. 2 | Inventive Ex. 3 | Comp. Ex. |
|---|---|---|---|---|
| Isobutylene polymer | 100 | 100 | 100 | |
| | | | | |
| Polyether polymer^{*1} | | | | 100 |
| | | | | |
| Ammonium polyphosphate compound^{*2} | 100 | 150 | 75 | 100 |
| | | | | |
| Polyfunctional alcohol^{*3} | 40 | 60 | 30 | 40 |
| | | | | |
| Amino group-containing compound^{*4} | 15 | 15 | 15 | 15 |
| | | | | |
| Silanol compound condensation catalyst^{*5} | 3.75 | 3.75 | 3.75 | 3.75 |
| | | | | |
| Glauber's salt decahydrate | 5 | 5 | 5 | |
| | | | | |
| Paraffin-based process oil | 100 | 100 | 100 | |
| | | | | |
| Dioctyl phthalate (DOP) | | | | 50 |

| | | | | |
|---|---|---|---|---|
| In Table 2, *1 to *5 are as follows: *1: MS polymer (manufactured by Kanegafuchi Kagaku Kogyo KK) | | | | |
| *2: Sumi Safe PM (manufactured by Sumitomo Chemical Co., Ltd.) | | | | |
| *3: pentaerythritol | | | | |
| *4: dicyandiamide | | | | |
| *5: tin octylate/laurylamine (3/0.75) | | | | |

**Table 3**

| | Inventive Ex. 1 | Inventive Ex. 2 | Inventive Ex. 3 | Comp. Ex. |
|---|---|---|---|---|
| Rubber property test | | | | |
| M 50 (kgf/cm²) | 1.91 | 1.45 | 0.92 | 1.45 |
| | | | | |
| TB (kgf/cm²) | 3.61 | 5.09 | 3.23 | 3.98 |
| | | | | |
| EB (%) | 246 | 565 | 400 | 519 |
| | | | | |

| Foaming characteristics test | | | | |
|---|---|---|---|---|
| | | | | |
| Foaming multiplying factor | 4.5 | 5 | 4 | 10 |
| | | | | |
| Fallout of char layer | no | no | no | no |
| | | | | |

| Water resistance test | | | | |
|---|---|---|---|---|
| | | | | |
| Foaming multiplying factor | 4.3 | 4.5 | 3.7 | 4.0 |
| | | | | |
| Fallout of char layer | no | no | no | no |

As is evident from the results shown in table 3, the compositions of Inventive Examples 1 to 3 show lower foaming multiplying factor than that of the composition of Comparative Example in which a polyether polymer is used, but they have sufficient water resistance for foaming characteristics. On the contrary, the composition of Comparative Example in which a polyether polymer is used shows sharply reduced foaming characteristics in the water resistance test, thus confirming that the composition of the present invention is excellent in water resistance.

As described above, according to the intumescent (foaming type fireproof) composition of the present invention, the conventional problem regarding water resistance in relation to the foaming performance was greatly improved by the use of a saturated hydrocarbon polymer having low moisture permeability. This composition is particularly useful as sealants for use in the joints of general buildings, which require fire resistance and fireproof ability, and is also excellent not only in air tightness and water tightness as such sealant but also in durability, weather resistance, stone staining resistance and painting ability.

## Claims

1. An intumescent composition comprising (A) and (B) as essential components:
(A) a saturated hydrocarbon polymer comprising at least one silicon-containing group that has a hydroxyl or hydrolyzable group linked to a silicon atom and is capable of undergoing cross-linking by forming a siloxane bonding; and
(B) a polyphosphate compound.

2. The intumescent composition according to claim 1, which further comprises (C) a silanol condensation catalyst as an essential component.

3. The intumescent composition according to claim 1 or 2, which further comprises (D) a polyfunctional alcohol as an essential component.

4. The intumescent composition according to any of claims 1 to 3, which further comprises (E) an amino group-containing compound as an essential component.

5. The intumescent composition according to any of claims 1 to 5, wherein the polymer of (A) contains at least 50% by weight of isobutylene repeating units.

## Patentansprüche

1. Aufblähende Masse, umfassend (A) und (B) als wesentliche Komponenten:
(A) ein gesättigtes Kohlenwasserstoffpolymer, umfassend mindestens eine Silizium-enthaltende Gruppe, die eine an ein Siliziumatom gebundene Hydroxylgruppe oder hydrolysierbare Gruppe aufweist und eine Vernetzung zur Herstellung einer Siloxanbindung eingehen kann, und
(B) eine Polyphosphatverbindung.

2. Aufblähende Masse nach Anspruch 1, die außerdem
(C) einen Silanolkondensationskatalysator als eine wesentliche Komponente umfaßt.

3. Aufblähende Masse nach Anspruch 1 oder 2, die außerdem
(D) einen polyfunktionellen Alkohol als eine wesentliche Komponente umfaßt.

4. Aufblähende Masse nach einem der Ansprüche 1 bis 3, die außerdem
(E) eine Aminogruppen-enthaltende Verbindung als eine wesentliche Komponente umfaßt.

5. Aufblähende Masse nach einem der Ansprüche 1 bis 5,wobei das Polymer von (A) mindestens 50 Gew.-% wiederkehrende Einheiten von Isobutylen enthält.

## Revendications

1. Composition intumescente qui comprend les constituants (A) et (B) en tant que constituants essentiels :
(A) un polymère hydrocarboné saturé, qui comprend au moins un groupe contenant du silicium, qui comporte un groupe hydroxy ou hydrolysable lié à un atome de silicium et qui est apte à subir une réticulation par formation d'une liaison siloxane; et
(B) un composé polyphosphate.

2. Composition intumescente selon la revendication 1, qui comprend de plus (C) un catalyseur de condensation constitué par un silanol, en tant que constituant essentiel.

3. Composition intumescente selon la revendication 1 ou 2, qui comprend de plus (D) un alcool polyfonctionnel, en tant que constituant essentiel.

4. Composition intumescente selon l'une quelconque des revendications 1 à 3, qui comprend de plus (E) un composé contenant un groupe amino, en tant que constituant essentiel.

5. Composition intumescente selon l'une quelconque des revendications 1 à 5, dans laquelle le polymère du constituant (A) contient au moins 50% en poids de motifs répétitifs isobutylène.
